# EUROPEAN PATENT APPLICATION

(11) **EP 2 476 306 A2**
(43) Date of publication of application: **18.07.2012**
(21) Application number: 12151326.1
(22) Date of filing: 16.01.2012
(51) Int. Cl.: A01G 13/02

(54) **Protectors for growing plants**

(30) Priority: 17.01.2011 GB 201100737; 24.03.2011 GB 201104961
(71) Applicant: Àkesson, Mats Yngve, Colwyn Bay LL29 7ND (GB)
(72) Inventor: Àkesson, Mats Yngve, Colwyn Bay LL29 7ND (GB)
(74) Representative: Hamilton, Alistair

(57) **Abstract**

A shelter for a growing plant, such as a sapling, is disclosed. The shelter is formed by a tube (10) of spirally wound layers of paper or board glued together with a penetrating paper converting adhesive. The layers of paper or board may be treated by a biocide, which is preferably water-soluble. Such a shelter is formed to be biodegradable in a controlled manner, so removal of the protector is not essential once the plant has grown beyond the need for protection.

## Description

This invention relates to protectors for growing trees. In particular, it relates to protectors that can reduce the incidence of saplings being attacked and damaged by animals, reduce the likelihood of wind damage, and create a sheltered environment beneficial to the growth of a tree or other plant.

The use of tree protectors in the form of a tube made out of various plastics is well established. These plastic tubes are typically made of a material that does not degrade for many years, so they must be removed from the site once the plant they are to protect has become sufficiently established. Once they have been removed, the plastic tubes will either have to be sent to landfill as a plastic refuse or cleaned and then sent to a specialist recycling centre. Either method of disposal is costly in terms of labour, transport and landfill or recycling costs.

Therefore, there is clearly an advantage in providing a protector that can be used to protect a sapling or other plant in the same manner as existing protectors but which has a substantially lower environmental and economic cost. The applicant has realised that a tree protector formed from a biodegradable material has several advantages, in that not only is the cost of disposal of the used materials is saved, the laborious task of removing the protectors from the grown plants is avoided. Moreover, if a conventional protector is accidentally left in place, it is likely to kill the plant that it is intended to protect. This problem is avoided if the protector is engineered to decompose a suitable period after it has been installed. If inspection shows that a protector that has not yet fully decomposed is restricting the growth of a plant, then it can be removed from the plant and left on site to decompose.

While the advantages of a biodegradable plant protector are clearly apparent, care must be taken to ensure that degradation happens at a rate that is neither too quick as to leave a small plant unprotected, nor too slow as to hamper the plant's growth.

To this end, the invention provides a shelter for a growing plant formed by a tube of spirally wound or convolute layers of paper or board glued together with a penetrating paper converting adhesive, in which the tube is treated with a water-based solution that includes a biocide and a dispersion of materials for water and weather proofing.

Suitably, the adhesive may include PVA, or may include a starch based, hot-melt or similar adhesive.

The biocide should preferably be of natural compounds or otherwise biodegradable. The biocide may be a water-soluble (as opposed to solvent-based) biocide or a biocide that can be held in a suspension.

The water-based solution can also hold a water dispersion of materials such as wax or acrylics for weather proofing. The biocide and weather proofing treatments can be combined into one post-construction treatment. The treatment may include a moluscicide such as aluminium sulphate or copper sulphate. Alternatively, weather proofing can be achieved by treating the tube with melted wax or with a wax dispersion.

Advantageously, the inside of the tube is of a pale colour or white. It may be formed of a material that is naturally light in colour, it may be coated with a pigment or paint, or it may be covered with a thin layer of white or light-coloured paper. This is advantageous in that it provides additional light required by the plant for photosynthesis. The light measured inside and at the bottom of a tube with white inner lining gives up to 15 times more light compared with the inside a normal paper tube with an inside with a natural brown/grey colour.

Likewise, the outer surface of the tube may be of a pale colour or white. It may be formed of a material that is naturally light in colour, it may be coated with a pigment or paint, or it may be covered with a thin layer of white or light-coloured paper. The outer layer is preferably white for a protector that is to be used with young coniferous tree saplings, since this has been found to act as a deterrent to attack on the tree by insects such as bark-eating weevils.

In preferred embodiments, a single treatment solution is used to treat the constructed tube, the solution being water-based, and including a dispersal of water-soluble wax, a biocide, a moluscicide and a pigment.

An embodiment of the invention will now be described in detail, by way of example, and with reference to the accompanying drawings, in which:
Figure 1 shows a tree protector being an embodiment of the invention;
Figure 2 is a diagrammatic cross-section of a wall of the tree protector of Figure 1; and
Figure 3 is a diagrammatic cross-section of a wall of the tree protector of Figure 1 in a region close to where two of its components abut one another.

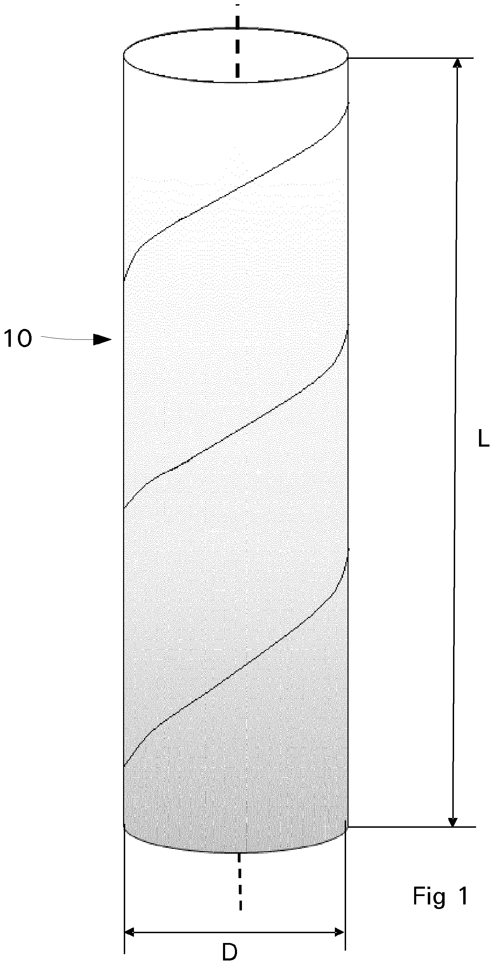

As shown in Figure 1, a tree protector embodying the invention comprises a spirally-wound paper tube 10.

The length L and diameter D of the tree protector is selected on the basis of its intended use. The smallest-diameter version will typically be used for protection of young coniferous saplings. These tubes will typically be of length L between 100 mm and 250 mm, with a diameter D of between 20 mm and 40 mm. A typical standard tree shelter tube will have a diameter D of between 60 mm and 125 mm and a length L of between 600 mm and 1200 mm. A plant shelter for shrubs or multi-stemmed trees will have a larger diameter D, typically between 125 mm and 300 mm with a length of between 600 mm and 1200 mm. These are typical values and other applications may require alternative dimensions.

An end portion of the protector (which will be placed uppermost for use) may optionally be formed with a flare or a taper that increases its diameter with respect to the rest of the tree protector. This minimises the risk of damage to a growing tree occurring through contact where it emerges from the protector.

The general manufacturing technology for spirally-wound paper tubes is well known, and will not be elaborated in detail here. Such tubes are used in a multitude of applications including in the packaging and construction industries and as winding cores in the manufacture of textiles, carpets and tissue to name but a few applications.

Embodiments of the invention use a variation of the known paper tube in order to create a product suitable for the use as a tree or plant shelter.

The tube 10 is formed from two or more laminae 12 of paper (or board) that are spirally-wound together and secured to one another by PVA glue 14.

The paper used can be made from either virgin or recycled stock. The paper used must be initially untreated. Specifically, waxed or plastic pre-coated surfaces on the paper as typically used to provide water resistance to so called fish block liners or similar products are not suitable. The presence of such coatings might prevent formation a fast setting and secure bond between laminated paper layers during the manufacturing process and during the use as a finished product. Moreover, such coatings are often not fully biodegradable.

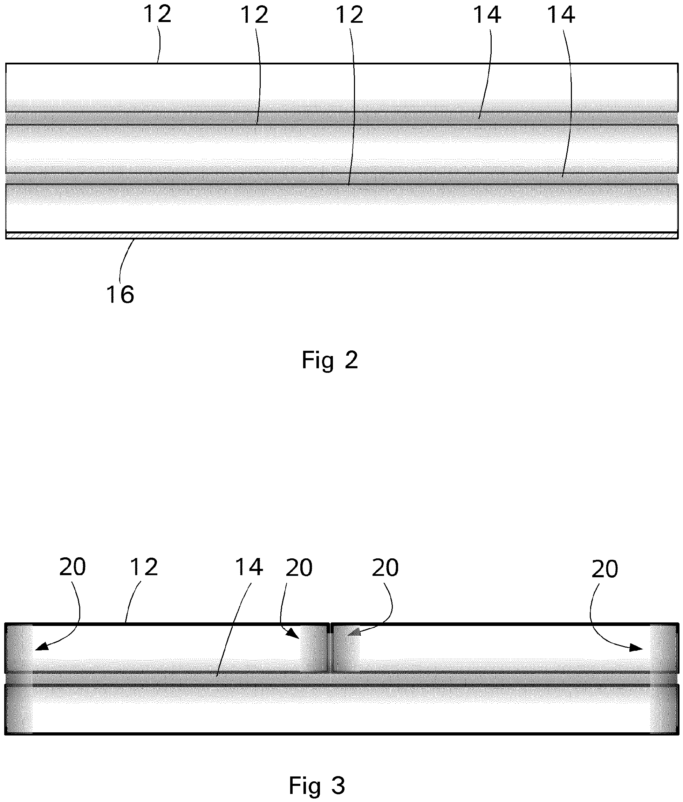

The adhesive used to secure the layers together is, in this embodiment, an adhesive for paper converting, of a type that has a waterproof or water-resistant quality. The adhesive 14 impregnates the laminae 12 some distance from the surface, as shown in Figure 2. The innermost layer is a white or light-coloured paper or alternatively or additionally be covered with a coat of white or light-coloured, biodegradable paint 16 to aid the reflection of natural light into the tube for the benefit of a growing young plant.

Paper is based on cellulose fibres which will biodegrade readily and fast when left in the open. In order to delay the degradation of the tube so it will be fit for its purpose it is treated after assembly and full curing of the adhesive.

The first step in this treatment is to impregnate the paper tube with a biocidical treatment such as pine tar to protect it from instant attack from microbes and fungi. Then the tube has applied water and weather proofing to protect it from mechanical breakdown. The lifespan of the finished plant protector is determined by the amount or concentration and type of biocide and type of weather proofing. This can be adjusted to suit the required lifespan of the product. Some products need to be usable for up to 3 years, while others may have a required lifetime of up to 5 years or so before being fully degraded. Speed of degradation is ultimately also determined by factors such as site and soil conditions.

In this embodiment, the biocide can be water-soluble and incorporated into a solution that also includes dispersed wax to act as a weather proofing.

It is highly preferable that the biocide and/or water proofing treatments are performed after construction of the paper tube. As shown in Figure 3, this allows treatment chemicals to soak in to the exposed end sections of the paper board at 20 or where adjacent lengths of the wound paper abut one another. To only rely on pre-laminated or pre-treated paper in the construction would leave these end regions of the paper along spirally wound paper uncoated and exposed and open to ingress of moisture etc.

As with conventional plastic plant shelters, this embodiment must be secured by tying it to a wooden stake that is driven into the ground at the time of planting a sapling or other plant to be protected. The ties typically used within the industry at the moment are cable ties made out of nylon, which is not biodegradable. Therefore, in combination with embodiments of the invention, it is preferable to use a tie that is made of a sustainable and biodegradable material using, for instance, natural fibre twines treated against degradation with, for instance, pine tar or similar.

## Claims

1. A shelter (10) for a growing plant formed by a tube of spirally wound or convolute layers of paper or board glued together with a penetrating paper converting adhesive in which the tube is treated with a water-based solution **characterised in that** the water-based solution includes a biocide and a dispersion of materials for water and weather proofing.

2. A shelter for a growing plant according to claim 1 in which the adhesive includes PVA, a starch based or a hot-melt adhesive.

3. A shelter for a growing plant according to any preceding claim in which the biocide comprises compounds that are biodegradable or natural.

4. A shelter for a growing plant according to any preceding claim in which the biocide is water-soluble.

5. A shelter for a growing plant according to any preceding claim in which the biocide is held in a suspension.

6. A shelter for a growing plant according to any preceding claim in which the tube has applied water and weather proofing to protect it from mechanical breakdown.

7. A shelter for a growing plant according to any preceding claim in which the materials for water and weather proofing include one or more of wax or acrylic.

8. A shelter for a growing plant according to any preceding claim in which water and weather proofing includes melted wax applied to the tube.

9. A shelter for a growing plant according to any preceding claim in which the inside of the tube is of a pale colour or white.

10. A shelter for a growing plant according to claim 9 in which the tube is formed of a material that is naturally light in colour.

11. A shelter for a growing plant according to claim 9 in which the tube is coated with a pigment or paint.

12. A shelter for a growing plant according to claim 9 in which the tube is covered with a thin layer of white or light-coloured paper.

13. A shelter for a growing plant according to any preceding claim in which the outer surface of the tube may is a pale colour or white.

14. A shelter for a growing plant according to any preceding claim in which a single treatment solution is used to treat the constructed tube, the solution being water-based, and including a dispersal of water-soluble wax, a biocide, a moluscicide and a pigment.
